# EUROPEAN PATENT APPLICATION

(11) **EP 4 807 549 A1**
(43) Date of publication of application: **16.09.2026**
(21) Application number: 26159008.7
(22) Date of filing: 17.02.2026
(51) Int. Cl.: G06F 9/48, G06F 9/50, G06F 16/2453, G06F 16/2458

(54) **SCHEDULING TASKS FOR DISTRIBUTED QUERY EXECUTION**

(30) Priority: 25.02.2025 US 202519062817
(71) Applicant: Microsoft Technology Licensing, LLC, Redmond, WA 98052 (US)
(72) Inventor: GUO, Run Sheng, Redmond, Washington 98052 (US); SEN, Rathijit, Redmond, Washington 98052 (US); SRINIVASAN, Krishnan, Redmond, Washington 98052 (US); SABORIT, Jose Aguilar, Redmond, Washington 98052 (US); DASH, Sumeet Priyadarshee, Redmond, Washington 98052 (US); HAYNES, Brandon Barry, Redmond, Washington 98052 (US)
(74) Representative: CMS Cameron McKenna Nabarro Olswang LLP

(57) **Abstract**

Methods, apparatuses, and products for scheduling tasks for distributed query execution, including: assigning, to a plurality of tasks associated with one or more database queries, a corresponding priority value based on at least one of: an estimated runtime for each of the plurality of tasks and one or more task dependencies; and generating a schedule for executing the plurality of tasks in the distributed computing system by iteratively scheduling, for each task of the plurality of tasks, execution of a highest priority pending task able to be executed in a distributed computing system, wherein the highest priority pending task is included in a pending subset of the plurality of tasks pending execution in the distributed computing system.

## Description

### BACKGROUND

Distributed computing systems allow for multiple compute nodes to work in parallel to accelerate completion of some operation. For example, a database query to be executed can be decomposed into multiple tasks. These tasks can then be executed across multiple nodes to reduce the amount of time to complete execution of the database query. Thus, by leveraging the computational resources of multiple nodes concurrently, distributed computing systems achieve significant performance improvements compared to executing the entire operation in a single node.

In order to make efficient use of computational resources and further reduce the total runtime, schedulers are used to determine the order in which these tasks are performed, as well as the nodes that will be used to execute each task. Schedulers may take into account various factors when scheduling tasks for execution in certain nodes, such as the estimated runtimes for the tasks. Schedulers must also take into account dependencies between tasks. Where certain tasks depend on the completion of other tasks, these tasks must be scheduled after the other tasks have been completed.

Schedulers may use different algorithms or approaches for determining how to schedule tasks for execution at particular times and on particular nodes. Some existing scheduling algorithms may schedule tasks using their estimated runtimes. As these approaches cannot adapt to when the tasks actually complete, their use may result in performance degradation where the actual runtimes differ from the estimated runtimes. Some existing scheduling implementations also require that all tasks to be scheduled to be known and scheduled in advance. These approaches cannot adapt to new tasks being added for scheduling, such as when additional queries are received over time while scheduling and executing some other set of tasks.

### SUMMARY

According to embodiments of the present disclosure, various methods, apparatus, and products for scheduling tasks for distributed query execution are described herein. In some aspects, scheduling tasks for distributed query execution includes: assigning, to a plurality of tasks associated with one or more database queries, a corresponding priority value based on at least one of: an estimated runtime for each of the plurality of tasks and one or more task dependencies; and generating a schedule for executing the plurality of tasks in the distributed computing system by iteratively scheduling, for each task of the plurality of tasks, execution of a highest priority pending task able to be executed in a distributed computing system, wherein the highest priority pending task is included in a pending subset of the plurality of tasks pending execution in the distributed computing system. In some aspects, an apparatus may include a memory and one or more processing devices, operatively coupled to the memory, the one or more processing devices configured to perform similar steps. In some aspects, a computer program product comprising a computer readable storage medium may store computer program instructions that, when executed, perform similar steps.

### BRIEF DESCRIPTION OF DRAWINGS

Fig. 1A sets forth a directed acyclic graph representing a distributed execution plan for scheduling tasks for distributed query execution in accordance with some embodiments of the present disclosure.
Fig. 1B sets forth an example table associating priority values with tasks for scheduling tasks for distributed query execution in accordance with some embodiments of the present disclosure.
Fig. 2A sets forth an example task schedule for scheduling tasks for distributed query execution in accordance with some embodiments of the present disclosure.
Fig. 2B sets forth another example task schedule scheduling tasks for distributed query execution in accordance with some embodiments of the present disclosure.
Fig. 3 sets forth a flow chart illustrating an example method of scheduling tasks for distributed query execution in accordance with some embodiments.
Fig. 4 sets forth a flow chart illustrating an additional example method of scheduling tasks for distributed query execution in accordance with some embodiments.
Fig. 5 sets forth a flow chart illustrating an additional example method of scheduling tasks for distributed query execution in accordance with some embodiments.
Fig. 6 sets forth a flow chart illustrating an additional example method of scheduling tasks for distributed query execution in accordance with some embodiments.
Fig. 7 sets forth a flow chart illustrating an additional example method of scheduling tasks for distributed query execution in accordance with some embodiments.
Fig. 8 sets forth a flow chart illustrating an additional example method of scheduling tasks for distributed query execution in accordance with some embodiments.
Fig. 9 sets forth a flow chart illustrating an additional example method of scheduling tasks for distributed query execution in accordance with some embodiments.
Fig. 10 sets forth a flow chart illustrating an additional example method of scheduling tasks for distributed query execution in accordance with some embodiments.
Fig. 11 sets forth a flow chart illustrating an additional example method of scheduling tasks for distributed query execution in accordance with some embodiments.
Fig. 12 illustrates an exemplary computing device that may be specifically configured to perform one or more of the processes described in the present disclosure.
Fig. 13 sets forth a block diagram of a cloud service provider service architecture in accordance with some embodiments of the present disclosure.

### DESCRIPTION OF EMBODIMENTS

Distributed computing systems allow for multiple compute nodes to work in parallel to accelerate completion of some task or function. For example, a database query to be executed can be decomposed into multiple tasks. These tasks can then be executed across multiple nodes to reduce the amount of time to complete execution of the database query. Some of these tasks may be dependent on others, requiring that certain tasks be completed before other tasks can begin. Moreover, tasks may vary in the time required to complete execution. Due to these dependencies and varying completion times, the order in which these tasks are executed and how these tasks are executed in parallel across nodes can significantly impact the overall time required to complete execution of the database query.

Schedulers can be used to determine the order in which these tasks are performed, as well as the nodes that will be used to execute each task. Some existing scheduling implementations, such as heterogeneous earliest finish time (HEFT), can be used to schedule particular tasks for execution on particular nodes based on their estimated completion times. This approach requires that the entire set of tasks to be executed be known in advance. Moreover, as this approach is based on estimated completion times, deviations in the actual completion times may introduce performance degradation.

To address these shortcomings, the approaches set forth herein describe approaches for task scheduling using dynamic heterogeneous earliest finish time (dHEFT). Using dHEFT, each task for a query is assigned a priority value based on some criteria like estimated execution time or task dependencies. Over time, the highest priority task able to be executed is scheduled for execution. In contrast to other implementations such as HEFT, dHEFT allows for additional tasks associated with additional database queries to be scheduled for execution by calculating their priority values and adding them to the set of pending tasks. Thus, while other implementations require that the entire set of tasks be known in advance, dHEFT allows for new tasks to be added over time. Moreover, rather than relying on estimated completion times that may be inaccurate, dHEFT continually monitors the available capacity of the distributed computing system and the completion status of executing tasks to dynamically schedule new tasks for execution.

Other approaches set forth herein perform scheduling by adapting the tasks and the distributed computing system to an integer linear program (ILP). An ILP is an optimization problem to find a set of variables usable in scheduling the tasks for execution in the distributed computing system that minimizes the overall execution time. The minimized execution time for the solved ILP problem may be used as a metric for evaluating schedulers, such as dHEFT or any other heuristic-based scheduler. The variables for the solved ILP problem may themselves be used to create a schedule for executing the tasks that has been mathematically proven to be optimal or near-optimal.

Schedulers are essential in leveraging distributed computing systems for performance improvements. Inefficient or inaccurate schedulers may introduce performance degradations, deterring users and harming overall adoption rates, leading to lost revenue. The approaches set forth herein provide for efficient schedulers that can adapt to new tasks and are not dependent on estimated completion times, improving the overall performance. This may increase overall revenue due to increased adoption. Additionally, as these approaches efficiently use available hardware in distributed computing systems, the overall amount of hardware required in such systems may be reduced, saving costs.

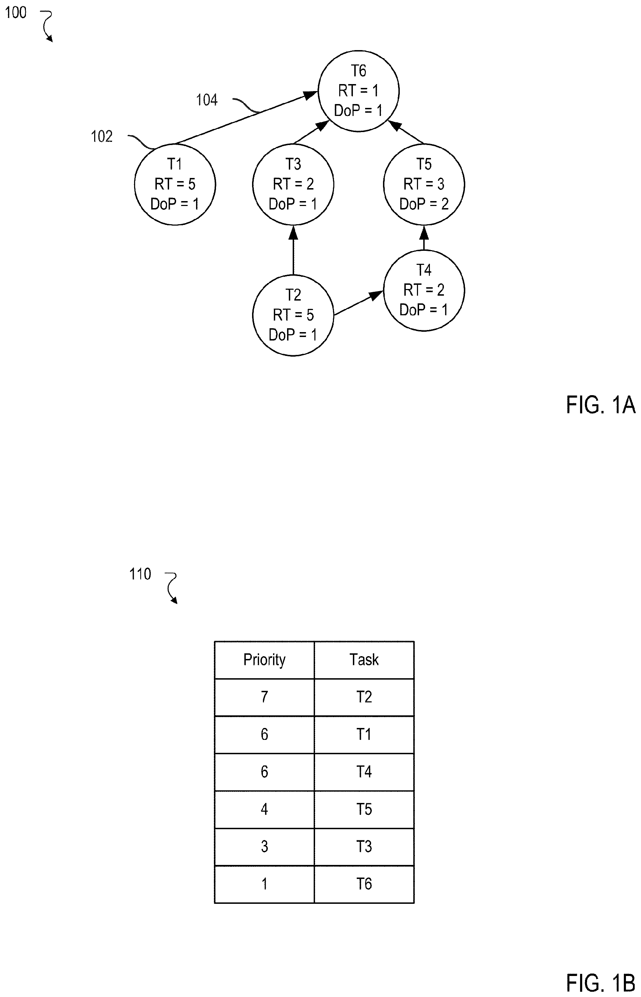

To begin, Fig. 1A sets forth a directed acyclic graph 100 representing a distributed execution plan for scheduling tasks for distributed query execution in accordance with some embodiments of the present disclosure. In some embodiments, a scheduler or other process or service facilitating distributed execution of database queries generates a distributed execution plan for a particular query. To do so, in some embodiments, a database query can be decomposed into multiple operations. These operations may include, for example, operations to access data, transform data, and the like. These operations may then be logically grouped into "tasks" according to various approaches (e.g., across data movement boundaries or based on other criteria). Particularly, the operations included on a particular task can be executed in isolation, sometimes in parallel with other tasks. In some embodiments, each task can therefore include a subset of operations of an associated database query.

Here, each task of an example distributed execution plan are encoded as nodes 102 of the directed acyclic graph. In this example, each node 102 includes a task identifier (e.g., T1, T2, and the like) to distinguish each task from each other task. Each node 102 also includes a runtime "RT" indicating an estimated runtime for executing the corresponding task. The estimated runtime for a given task may be determined based on various approaches as can be appreciated and based on various criteria, such as the particular operations included in the task, an estimated amount of data to be acted upon in the task, and the like. Each node 102 also includes a degree of parallelism "DoP" indicating the degree to which a particular task can be executed in parallel across multiple nodes of a distributed computing system. For example, a DoP of one indicates that a task cannot be run in parallel across multiple nodes and must instead be executed within a single node. As another example, a degree of parallelism of two, such as in task T5, indicates that the task can be executed in parallel across two nodes.

In some embodiments, tasks are dependent upon one another such that one task must complete execution before another task can begin execution. For example, a first task may be dependent upon a second task where an output from the second task serves as an input to the first task. In the example directed acyclic graph 100, each edge 104 indicates a dependency between the tasks of the linked nodes 102. For example, task T6 is dependent on task T1, indicating that task T1 must complete before task T6 can begin.

Using attributes shown in the directed acyclic graph 100 such as task dependencies and runtimes, each task can be assigned a priority value that may be used in scheduling the tasks for execution in a distributed computing system. Accordingly, Fig. 1B shows an example table 110 assigning priority values to different tasks. Although the priority values of the table 110 are shown as integer values, readers will appreciate that, in some embodiments, priority values may be defined with different degrees of granularity or by other approaches.

The priority value for a particular task may be calculated according to a variety of approaches. In some embodiments, tasks with longer runtimes are assigned a higher priority than tasks with shorter runtimes. In some embodiments, tasks with longer runtimes for their dependent tasks are assigned a higher priority than tasks with shorter runtimes for their dependent tasks. For example, tasks T1 and T2 are tied for the highest runtime of five and have the highest priority values of six and seven, respectively. Here, task T2 may be assigned a higher runtime of task T1 as task T2 has longer-running dependents than task T1. Particularly, task T1 only has a single dependent task T6 with a runtime of one while task T2 has multiple dependent tasks including task T6 and other tasks with runtimes of two or greater. Thus, task T2 may be assigned a higher priority value than task T1 due to having an equal runtime but longer-running dependents compared to task T1.

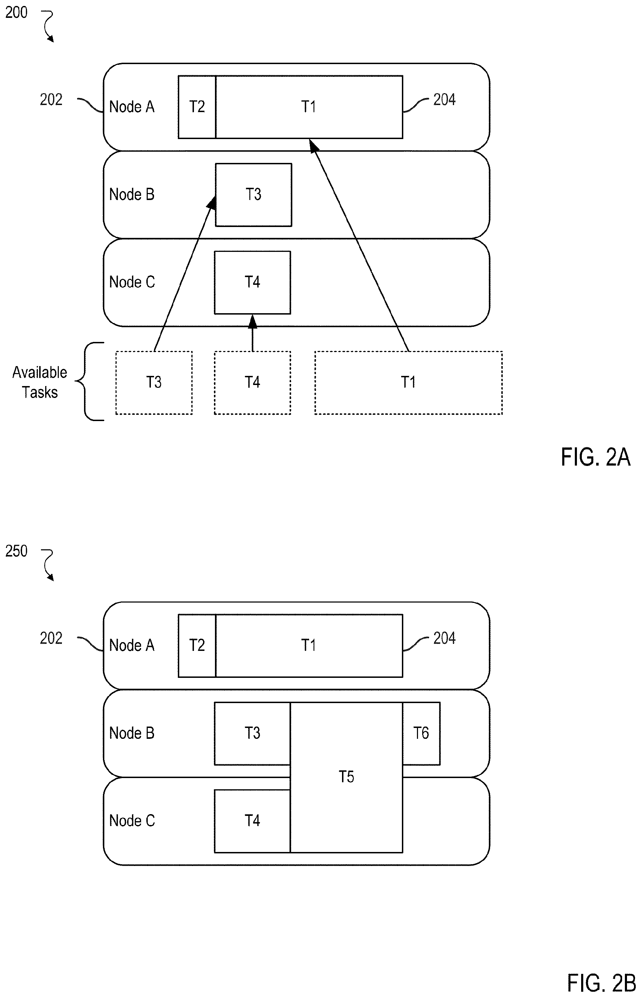

Having calculated the priority values for the tasks of a particular query, the tasks may then be scheduled for execution in a distributed computing system. To illustrate this, Fig. 2A sets forth an example task schedule 200 for scheduling tasks for distributed query execution in accordance with some embodiments of the present disclosure. The task schedule 200 includes multiple nodes 202 of a distributed computing system. A task 204 placed within a particular node 202 indicates that the particular task is scheduled for execution in the particular node 202. Here, the width of the visual representations of tasks 204 correspond to their runtimes. Thus, wider tasks 204 have longer runtime than narrower tasks 204. The horizontal alignment of tasks 204 indicate when that task 204 is scheduled for execution relative to other tasks 204. For example, tasks 204 T1 and T4 are scheduled for concurrent execution in nodes 202 A and C, respectively, after task 204 T2 has completed.

In order to schedule tasks 204 for execution in the distributed computing system, tasks 204 are iteratively scheduled over time, such as in response to some task 204 completing execution. At a given time, such as when a task 204 has completed execution, there may be a set of tasks 204 that have yet to be scheduled for execution, hereinafter referred to as pending tasks 204. Those pending tasks 204 that can be executed at the given time are identified and a highest priority pending task 204 from those pending tasks 204 that can be executed is scheduled for execution in the distributed computing system. This approach for iteratively scheduling the highest priority task that can be executed is hereinafter referred to as "dynamic heterogeneous earliest finish time" (dHEFT).

As referred to herein, scheduling a task 204 causes a task 204 to be executed (e.g., schedules a task 204 for execution) at a particular time or in response to a particular event. A task 204 can be executed at a given time provided that any of its dependencies have completed execution. In some embodiments, a task 204 can be executed at a given time where there is available capacity across multiple nodes 202 to satisfy the degree of parallelism for that task 204. As will be described in further detail below, a task 204 can be executed at a given time based on other constraints, such as placement constraints for particular tasks 204 in particular nodes. In this example, task T2 completing its execution may cause a scheduler to schedule additional tasks 204 for execution in the distributed computing system. Here, tasks 204 T1, T3, and T4 are able to be executed as T3 and T4 are each dependent on task 204 T2 and T1 has no dependencies. Accordingly, these tasks 204 are scheduled for execution in nodes 202 A, B, and C, respectively.

The process of iteratively scheduling the highest priority pending task 204 able to be executed is repeated over time until all tasks 204 are scheduled, resulting in the task schedule 250 shown in Fig. 2B. For example, in response to tasks 204 T3 and T4 completing execution, task 204 T5 may be scheduled as its dependency on task 204 T4 has been satisfied and there are two available nodes 202 to satisfy its degree of parallelism of two. Task 204 T6 may be scheduled for execution in response to completing execution of tasks 204 T1 and T5, thereby satisfying its dependencies of tasks 204 T3, T5, and T6.

As is set forth above, in some embodiments, tasks 204 are scheduled for execution based on one or more placement constraints. In some embodiments, tasks 204 are included in a particular classification or type of task 204. For example, in some embodiments, tasks 204 are classified as either utility tasks 204 that require accessing a data store (e.g., a database, data warehouse, and the like) or locality tasks 204 that perform operations on other data without requiring access to a data store. A placement constraint restricts which type of tasks 204 can be executed on particular nodes 202. For example, in some embodiments, specific nodes 202 are able to only execute tasks 204 of a particular type. As another example, in some embodiments, specific nodes 202 are assigned a type such that nodes 202 can only execute tasks 204 matching their assigned type. Readers will appreciate that these examples of task 204 types are merely illustrative and that other types, as well as other placement constraints, are also contemplated within the scope of the present disclosure.

In some embodiments, during execution and scheduling of tasks 204, additional queries are received for execution. In response, distributed execution plans for these queries may be generated according to similar approaches as are set forth above, including generating tasks 204 for these queries and assigning priority values to those tasks 204. In some embodiments, these additional tasks 204 are added to the pending tasks 204, thereby allowing for additional tasks 204 to be scheduled for execution while tasks 204 for previously received queries are still executing and scheduling. As such, the schedule for tasks 204 can by dynamically adjusted as new queries are received.

Readers will appreciate that the approaches set forth herein using dHEFT provide significant advantages over other scheduling implementations. For example, some existing implementations such as heterogeneous earliest finish time (HEFT) are limited to scheduling a predefined, static set of tasks known in advance. Should any queries be received while executing a set of tasks using these approaches, the existing task schedule cannot be modified to reflect the tasks for these subsequently received queries. In contrast, the approaches set forth herein allow for tasks for queries received over time to be included in the schedule, thereby allowing the schedule to be dynamically adjusted over time. Moreover, in some existing implementations such as HEFT or other implementations, tasks are scheduled using runtimes assumed to be known in advance, which can lead to inefficiencies such as head-of-line blocking when actual runtimes deviate from predictions. In contrast, as dHEFT scheduling dynamically schedules tasks over time in response to tasks completing execution (e.g., based on the actual runtime), these inefficiencies are mitigated. Additionally, the opportunistic scheduling of tasks based on available distributed system resources makes more efficient use of available resources while prioritizing longer running tasks, leading to significant performance improvements over other implementations.

Although the approaches set forth herein describe dHEFT with respect to scheduling tasks associated with database queries, readers will appreciate that these approaches may also be applied to any set of tasks that may be expressed as a directed acyclic graph for distributed execution.

In some embodiments, a dHEFT scheduling algorithm, or any other scheduling algorithm as can be appreciated, may be evaluated by comparing the total runtime (e.g., the makespan) for executing a set of scheduled tasks to an optimized value for executing the set of tasks. The optimized value is "optimized" in that it is a value output by a function minimized or maximized in an optimization problem. Readers will appreciate that an optimization problem is the process of identifying a set of variables that minimizes or maximizes some function (e.g., an optimization objective). In some embodiments, the optimization problem includes an integer linear program (ILP) problem or another optimization problem as can be appreciated.

In some embodiments, the function of the optimization problem includes a function for calculating the makespan of a scheduled set of tasks to be minimized. The makespan of a scheduled set of tasks can refer to the total time required to complete the set of tasks, measured as the time between the start of the first task and the completion of the last task. In a distributed system, minimizing makespan can be complex due to dependencies between tasks, resource constraints, and communication overhead. While various functions may be used to calculate makespan, functions used to calculate makespan for parallel processing of tasks may be more relevant here. Such functions may be configured for linear programming optimizations, optimizations that use a greedy approach to assign tasks to the machine with the earliest availability, or other parallel execution optimizations. In some embodiments, optimization objectives other than makespan may also be included in the optimization problem. Such optimization objectives may include, for example, a minimum average runtime per task, maximized resource utilizations, minimized financial costs, or other optimization objectives as can be appreciated.

In some embodiments, the optimization problem includes various parameters that may affect how and when particular tasks are assigned to particular nodes. For example, in some embodiments, these parameters include one or more attributes of the nodes of the distributing computing system, such as the number of cores for each node. As another example, some embodiments include one or more attributes of the tasks to be executed, such as the duration of each task, the degree of parallelism for each task, task dependencies, and the like. In some embodiments, where tasks and/or nodes are classified into particular types, these attributes may be defined with respect to each type. In some embodiments, the optimization problem includes one or more variables that may be modified while attempting to solve the optimization problem. These may include, for example, for a particular task, the start and/or end time for executing that task, a particular node in which to execute that task, or other variables as can be appreciated.

In some embodiments, by applying a solver to this optimization problem, an optimal set of variables producing an optimal makespan for executing the set of tasks may be generated. Solving the optimization problem (e.g., finding the actual optimal set of values and the actual optimal makespan for executing the set of tasks) may be resource or time prohibitive. Accordingly, in some embodiments, the solver is applied to the optimization problem for a predefined amount of time or until another event occurs. As the solver iteratively approaches the actual solution to the optimization problem, running the solver for some amount of time may produce a set of variables and a corresponding makespan that is close to, if not exactly, the actual solution. In some embodiments, upon terminating the ILP solver before finding the optimal value (e.g., due to some stop condition like runtime), the solver will also produce, for a minimization problem, a lower bound on the optimized value. Comparing the lower bound to the best solution found by the solver so far is useful for getting a sense of how far the best solution found by the ILP solver is from optimal. This may be used to evaluate how far from optimal another scheduling algorithm performs.

In some embodiments, this produced makespan (e.g., this optimized value) is used to evaluate another scheduling algorithm applied to the set of tasks subject to the optimization problem, including dHEFT as described above or another algorithm. For example, the makespan for executing the set of tasks using some scheduling algorithm (e.g., the executed makespan) may be compared to the optimized value (e.g., the optimized makespan). An evaluation for the scheduling algorithm may include, for example, a difference between the executed makespan and the optimized makespan, a visualization depicting the optimized makespan and one or more executed makespans for different scheduling algorithms, or other evaluations as can be appreciated. These evaluations may then be used to tune the scheduling algorithm, the distributed computing system, and the like.

As is set forth above, the variables of the optimization problem may indicate when particular tasks are executed on particular nodes of the distributed computing system. Accordingly, in some embodiments, the variables of the optimization problem produced by applying a solver may themselves be used as a schedule for executing the tasks subject to the optimization problem. As such, in some embodiments a schedule is generated based on the variables of the optimization problem and the tasks are executed using this generated schedule.

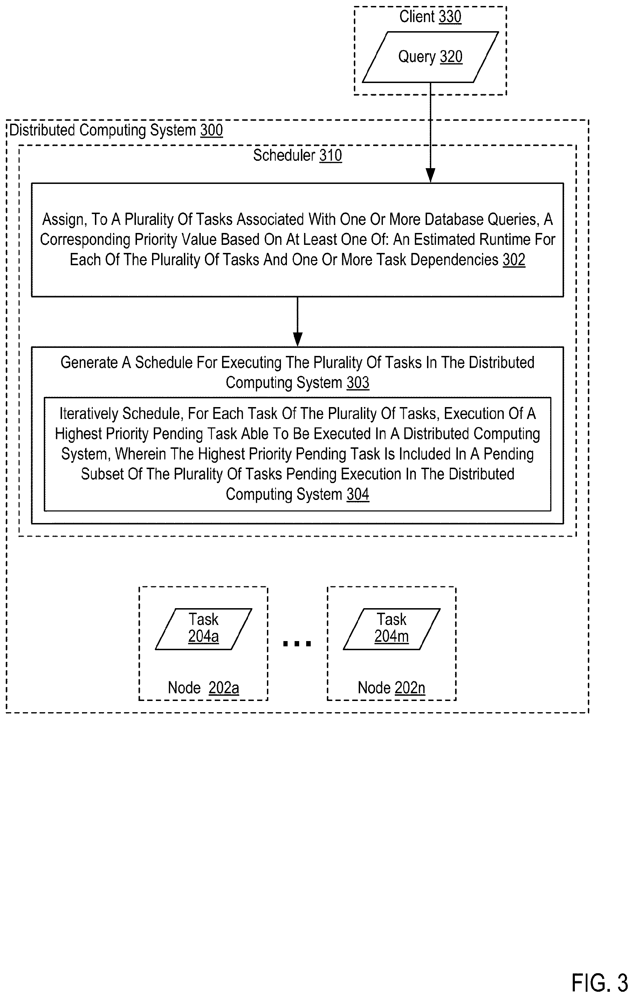

For further explanation, Fig. 3 sets forth a flowchart of an example method of scheduling tasks for distributed query execution in accordance with some embodiments of the present disclosure. The method of Fig. 3 may be performed, for example, by a schedule 310 of a distributed computing system 300. Although the method of Fig. 3 is depicted as being performed within the distributed computing system 300, readers will appreciate that, in some embodiments, the method of Fig. 3 is performed in another computing system operatively coupled to the distributed computing system 300.

The method of Fig. 3 includes assigning 302, to a plurality of tasks 204a-m associated with one or more database queries 320, a corresponding priority value based on at least one of: an estimated runtime for each of the plurality of tasks 204a-m and one or more task dependencies. In some embodiments, the queries 320 include one or more database queries 320 received from a client 330 for distributed execution in the distributed computing system 300. The plurality of tasks 204a-m may each include a subset of operations of an associated database query 320. Each task 204a-m may include a set of operations that may be executed in isolation, potentially in parallel with other tasks 204a-m. For example, the scheduler 310 or another process or service may decompose a query 320 into multiple operations and logically group these operations into a corresponding task 204a-m.

The priority value for a particular task is a value used to determine which of a set of pending tasks 204a-m should be scheduled for execution at a given time, as will be described in further detail below. In some embodiments, the priority value for a particular task 204a-m is based on an estimated runtime for the particular task 204a-m. For example, in some embodiments, tasks 204a-m with a longer estimated runtime are assigned a higher priority than tasks 204a-m with lower estimated runtimes. In some embodiments, the priority value for a particular task 204a-m are based one or more task dependencies in that the priority value may be based on an estimated runtime of one or more other tasks 204a-m dependent on the particular task (e.g., dependent runtimes). For example, in some embodiments, tasks 204a-m with a longer dependent runtimes are assigned a higher priority than tasks 204a-m with lower dependent runtimes.

The method of Fig. 3 also includes generating 303 a schedule for executing the plurality of tasks 204a-m in the distributed computing system 300, including iteratively scheduling 304, for each task 204a-m of the plurality of tasks 204a-m, execution of a highest priority pending task able to be executed in a distributed computing system 300, wherein the highest priority pending task 204 is included in a pending subset of the plurality of tasks 204a-m pending execution in the distributed computing system 300. Scheduling 304 a task 204a-m in the distributed computing system 300 causes the task 204a-m to be executed in one or more nodes 202a-n of the distributed computing system 300 at a particular time or in response to a particular event, such as execution of some other task 204a-m being completed. The tasks 204a-m are iteratively scheduled 304, rather than schedule each of the tasks 204a-m before the tasks 204a-m can begin execution, a subset of the tasks 204a-m may be initially scheduled for execution. Over time, as executed tasks 204a-m complete their execution or in response to other events, additional tasks 204a-m are scheduled 304 for execution. This process may be repeated until all tasks 204am have been scheduled 304 for execution.

For example, in response to some event indicating that a task 204a-m should be scheduled, the available capacity of the distributed computing system 300 may be determined. Based on this capacity and the one or more task dependencies, those pending tasks 204a-m (e.g., those tasks 204a-m not yet scheduled for execution) able to be executed in the distributed computing system 300 can be identified. A particular task 204a-m can be executed in the distributed computing system 300 where all dependencies for the particular task 204a-m are satisfied (e.g., any tasks 204a-m from which the particular task 204a-m depends) have completed execution and where there is available capacity in one or more nodes of the distributed computing system 300. The pending task 204a-m can be executed in the distributed computing system 300 with the highest priority value is then scheduled 304 for execution. In some embodiments, where there is available capacity to schedule 304 multiple tasks 204a-m for execution, multiple of the highest priority pending tasks 204a-m are scheduled 304 for execution. For example, where there is available capacity for two tasks 204a-m, the pending tasks 204a-m with the two highest priority values may be scheduled 304 for execution in the distributed computing system 300.

Readers will appreciate that the approaches set forth above allow for scheduling tasks 204a-m iteratively during execution of other tasks 204a-m in a set of tasks 204a-m based on the available capacity and priorities of the pending tasks 204a-m at a given time. This provides advantages over other solutions that require all tasks 204a-m to be scheduled in advance, preventing the schedule from adapting to new tasks 204a-m from newly received queries 320. Moreover, these approaches schedule tasks 204a-m for execution based on the actual runtimes of executing tasks, mitigating performance degradation caused by head-of-line blocking in approaches that reliant on estimated runtimes.

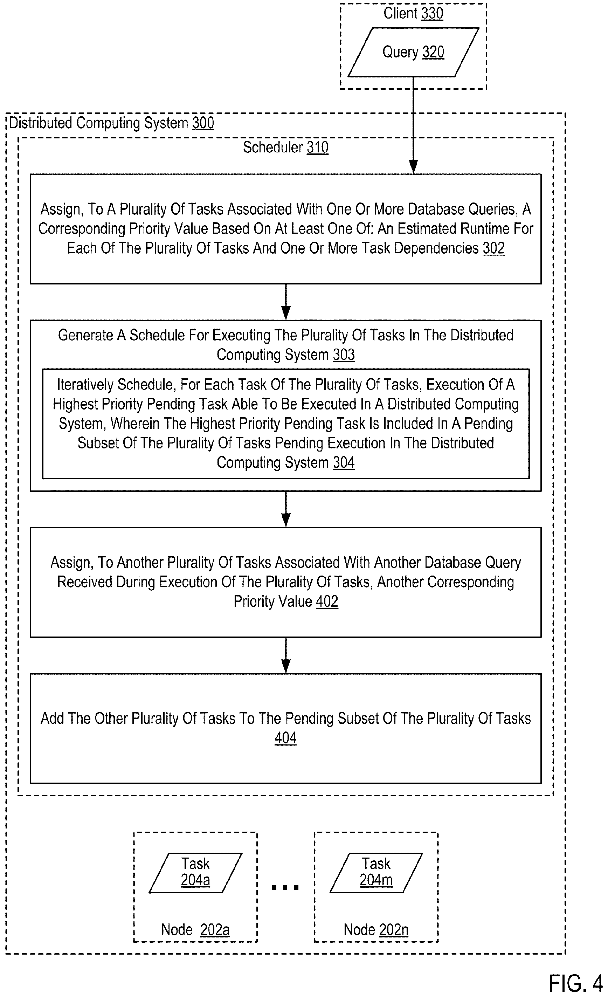

For further explanation, Fig. 4 sets forth a flowchart of another example method of scheduling tasks for distributed query execution in accordance with some embodiments of the present disclosure. The method of Fig. 4 also includes assigning 402, to another plurality of tasks associated with another database query 320 received during execution of the plurality of tasks 204a-m, another corresponding priority value. The priority values for this other plurality of tasks may be assigned 402 according to similar approaches as are set forth above. For example, during execution of the plurality of tasks 204a-m (e.g., during the execution and iterative scheduling 304 of these tasks 204a-m), another database query 320 can be received. Tasks 204a-m may be generated from this database query 320 and assigned 402 priority values.

The method of Fig. 4 also includes adding 404 the other plurality of tasks 204a-m to the pending subset of the plurality of tasks 204a-m. As such, the tasks 204a-m for the subsequently received database query 320 are added to the set of pending tasks 204a-m from which the scheduler 310 schedules tasks 204a-m. Thus, when iteratively scheduling 304 tasks 204a-m for execution, the scheduler 310 may potentially schedule a task 204a-m from the initial set of tasks 204a-m or from the tasks 204a-m associated with the subsequently received database query 320. This allows the schedule to adapt to and include newly received tasks 204a-m for newly received database queries 320, in contrast to existing approaches reliant on a static, predefined set of tasks 204a-m for scheduling.

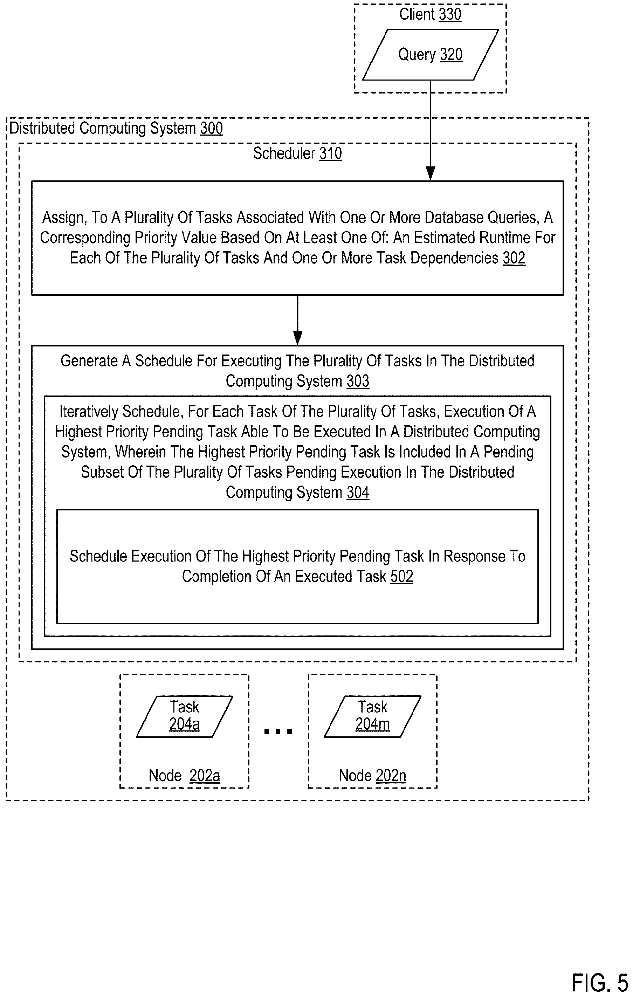

For further explanation, Fig. 5 sets forth a flowchart of another example method of scheduling tasks for distributed query execution in accordance with some embodiments of the present disclosure. In the method of Fig. 5, iteratively scheduling 304, for each task 204a-m of the plurality of tasks 204a-m, execution of a highest priority pending task able to be executed in a distributed computing system 300 includes scheduling 502 execution of the highest priority pending task 204a-m in response to completion of an executed task 204a-m. For example, assume that some task 204a-m previously scheduled for execution has completed. In response to this completion, the available capacity of nodes 202a-m in the distributed computing system 300, the priority values of pending tasks 204a-m, and potentially other factors are used to determine the highest priority pending task 204a-m able to be executed in the distributed computing system 300. This highest priority pending task 204a-m is scheduled 502 in response to the other task 204a-m completing its execution.

Readers will appreciate that this allows for tasks 204a-m to be scheduled 502 based on various factors at the time at which another task 204a-m has fully completed execution. This provides for more optimized resource utilization and mitigates inefficiencies such as head-of-line blocking introduced when a task 204a-m is prescheduled based on an inaccurate estimated runtime of another task 204a-m, improving overall system utility and performance.

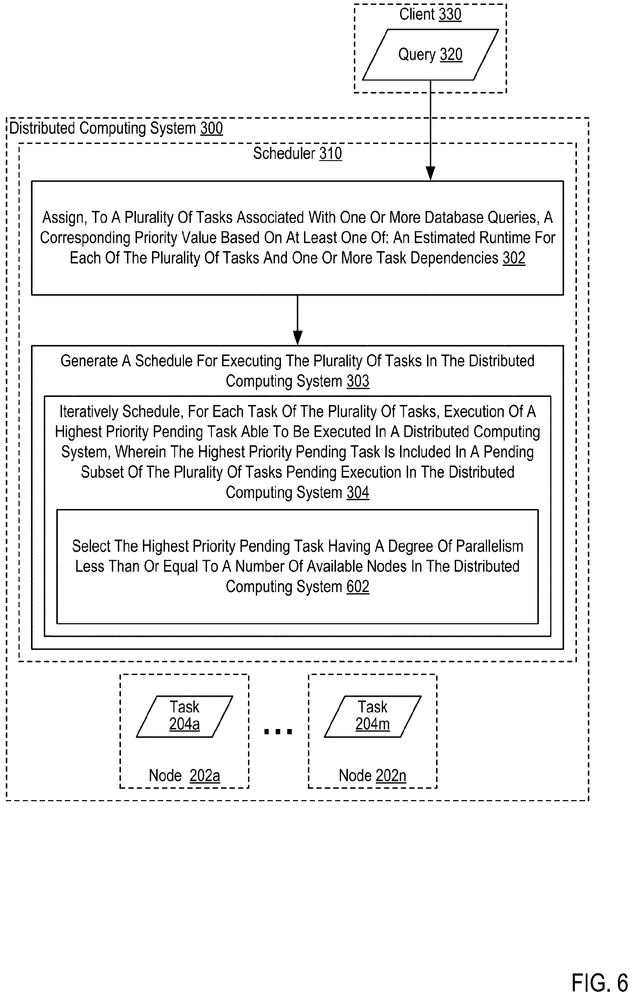

For further explanation, Fig. 6 sets forth a flowchart of another example method of scheduling tasks for distributed query execution in accordance with some embodiments of the present disclosure. In the method of Fig. 6, iteratively scheduling 304, for each task 204a-m of the plurality of tasks 204a-m, execution of a highest priority pending task able to be executed in a distributed computing system 300 includes selecting 602 the highest priority pending task 204am having a degree of parallelism less than or equal to a number of available nodes in the distributed computing system 300. As is set forth above, the degree of parallelism for a given task 204a-m indicates the degree to which that task 204a-m can be executed in parallel across multiple nodes 202a-n. For example, a task 204a-m with a degree of parallelism of one can only be executed in one node 202a-n while a task 204a-m with a degree of parallelism of two can be executed in up to two nodes 202a-n. A node 202a-n may be deemed available to run a particular task 204a-m where the node 202a-n has enough available computational resources to execute the particular task 204a-m. For example, a node 202a-n running some first task 204a-m may be deemed available to run a second task 204a-m where that node 202a-n has enough resources to run both the first and second task 204a-m concurrently.

Accordingly, selecting 602 the highest priority pending task 204a-m may include determining the available capacity of the distributed computing system 300, such as a number of nodes 202a-n available to execute some task 204a-m. The highest priority pending task 204a-m may then be selected 602 as the pending task with the highest priority value and whose degree of parallelism can be supported by the distributed computing system 300.

For example, assume a first task 204a-m having a priority value of seven and a degree of parallelism of two and a second task 204a-m having a priority value of five and a degree of parallelism of one. Further assume that all dependencies for the first and second task 204a-m are satisfied. Where the distributed computing system 300 has an available capacity of two nodes 202a-n, the first task 204a-m may be selected 602 as it has the highest priority value of the two tasks 204a-m and there are two nodes 202a-n available to support its degree of parallelism. Where the distributed computing system 300 has an available capacity of one node 202a-n, the second task 204a-m may be selected 602 as, though the first task 204a-m has a higher priority value, there is not enough capacity to support its degree of parallelism.

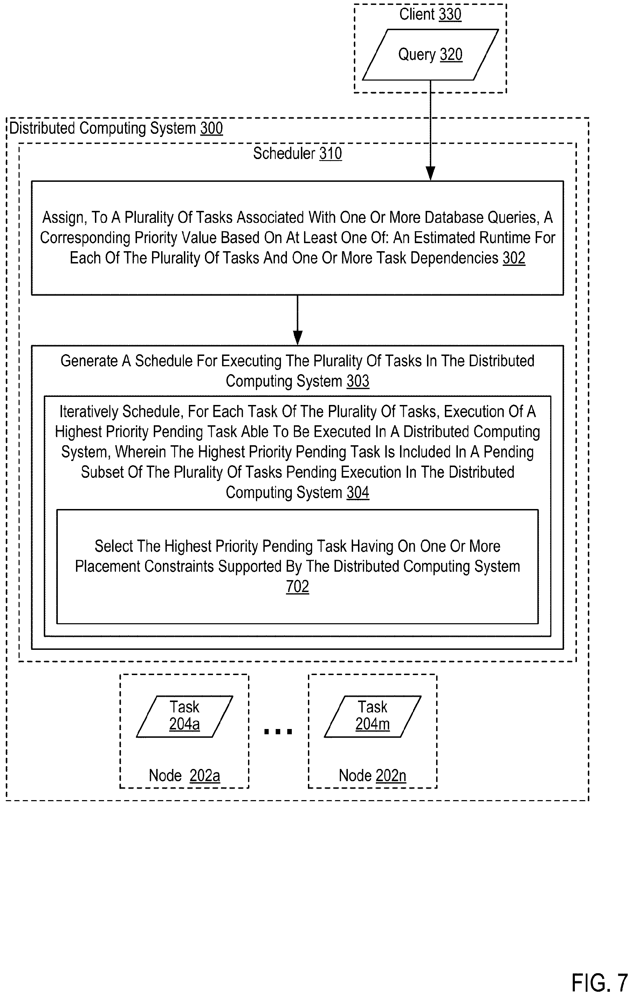

For further explanation, Fig. 7 sets forth a flowchart of another example method of scheduling tasks for distributed query execution in accordance with some embodiments of the present disclosure. In the method of Fig. 7, iteratively scheduling 304, for each task 204a-m of the plurality of tasks 204a-m, execution of a highest priority pending task able to be executed in a distributed computing system 300 includes selecting 702 the highest priority pending task 204am having one or more placement constraints supported by the distributed computing system 300. The one or more placement constraints defined conditions for which tasks 204a-m can be scheduled for execution in which nodes 202a-n. For example, the one or more placement conditions may define particular types of tasks 204a-m that can only be executed in particular types of nodes 202a-n.

For example, assume pending tasks 204a-m including a first task 204a-m of a first type having a priority value of six and a locality task 204a-m of a second type having a priority value of five. Further assume that the only node 202a-n with available capacity can only execute tasks 204a-m of the second type. In this example, the second task 204a-m will be scheduled despite having a lower priority value than the first task 204a-m as there is no available node 202a-m for executing tasks 204a-m of the first type.

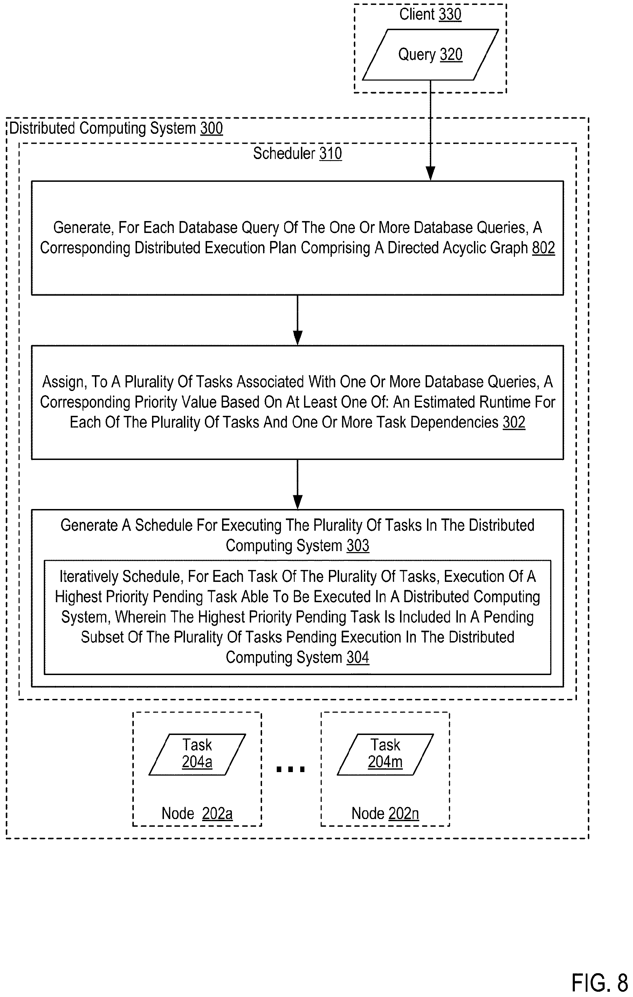

For further explanation, Fig. 8 sets forth a flowchart of another example method of scheduling tasks for distributed query execution in accordance with some embodiments of the present disclosure. The method of Fig. 8 also includes generating 802, for each database query 320 of the one or more database queries 320, a corresponding distributed execution plan comprising a directed acyclic graph. A distributed execution plan can represent a detailed strategy that describes how a query will be executed across multiple nodes in a distributed system, thereby improving execution relative to centralized, non-distributed query execution by dividing the workload associated with query execution.

In some embodiments, a given database query 320 is decomposed into multiple component operations. Each of these component operations may be logically grouped into tasks 204a-m able to be executed independently. In some embodiments, a directed acyclic graph is generated 802 from these tasks 204a-m, where the directed acyclic graph includes multiple nodes 102 each corresponding to a particular task 204a-m. Each node 102 may include attributes or features such as a task 204a-m identifier, an estimated runtime, a degree of parallelism, and the like. The nodes 102 may be linked by edges 104 indicating a dependency between a pair of tasks 204a-m. This directed acyclic graph may then be used, for example, in assigning 302 priority values calculated as a function of the graph structure and node 102 features.

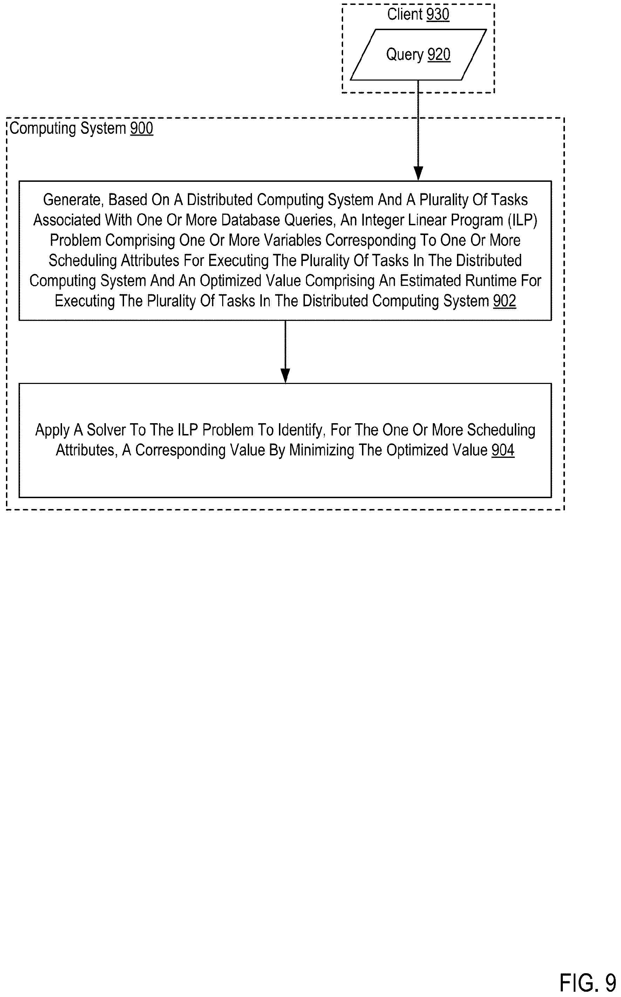

For further explanation, Fig. 9 sets forth a flowchart of another method of scheduling tasks for distributed query execution in accordance with some embodiments of the present disclosure. In some embodiments, the method of Fig. 9 is executed in a computing system 900. Such a computing system 900 may include, for example, a distributed computing system 300, another computing system 900 operatively coupled to a distributed computing system 300, or another computing system 900 as can be appreciated. In Fig. 9, a query 920 may be received from a client 930.

The method of Fig. 9 includes generating 902, based on a distributed computing system and a plurality of tasks 204 associated with one or more database queries, an integer linear program (ILP) problem comprising one or more variable corresponding to one or more scheduling attributes for executing the plurality of tasks 204 in the distributed computing system and an optimized value comprising an estimated runtime for executing the plurality of tasks 204 in the distributed computing system. An ILP problem is a type of optimization problem where the variables are integer values and the objective function and equations are linear. In some embodiments, the objective function is a function for minimizing the makespan for executing the plurality of tasks 204 in the distributed computing system. The variables of the ILP problem correspond to one or more scheduling attributes in that the variables may include the start time and/or stop time of a particular task executed in a particular node 202 or nodes 202. Thus, the one or more scheduling attributes describe a schedule for executing the plurality of tasks 204 in the distributed computing system.

The ILP problem may also include one or more parameters used in the objective function, constraints, or other equations in the optimization problem. In some embodiment, these one or more parameters may include attributes of the tasks 204 and/or nodes 202 of the distributed computing system. For example, in some embodiments the one or more parameters include estimated runtimes for each task 204, degrees of parallelism for each task 204, and the like. As another example, in some embodiments, the one or more parameters include numbers of cores for each node 202, or other parameters as can be appreciated.

Accordingly, generating 902 the ILP problem may include accessing data describing the distributed computing system and the tasks 204 and converting portions of that data into the ILP problem. Particularly, generating 902 the ILP problem may include encoding the ILP problem in a format usable by a solver in solving the ILP problem.

The method of Fig. 9 also includes applying 904 a solver to the ILP problem to identify, for the one or more scheduling attributes, a corresponding value by minimizing the optimized value. A solver is an application, algorithm, or system that iteratively modifies the variables of an optimization problem to find an optimal set of variables for some objective function. Here, the solver may be used to modify the variables (e.g., the scheduling attributes) of the ILP problem to find a set of variables that minimize the makespan for executing the plurality of tasks 204.

In some embodiments, it may be time or resource prohibitive for the solver to reach a fully optimal solution for the ILP problem. As the scheduler approaches this optimal set of variables over time, in some embodiments, the solver may be suspended or terminated after some amount of time, some number of iterations, or in response to some other condition. In these embodiments, the final set of variables may serve as a near-optimal set of variables. Thus, the generated schedule may include a set of variables generated by the solver after applying the solver to the ILP problem until some termination condition has been met. Although the approaches set forth herein describe solving the ILP problem using runtime as a bottleneck metric, readers will appreciate that other attributes of tasks 204 or nodes 202 may also be used as parameters of the ILP problem that serve as bottleneck metrics.

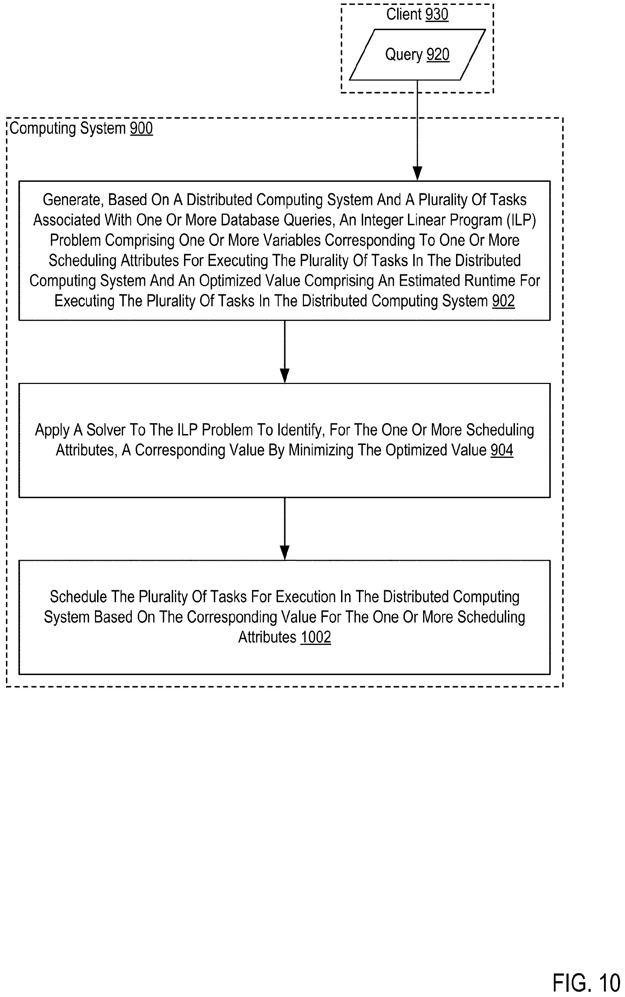

For further explanation, Fig. 10 sets forth a flowchart of another example method of scheduling tasks for distributed query execution in accordance with some embodiments of the present disclosure. The method of Fig. 10 also includes scheduling 1002 the plurality of tasks 204 for execution in the distributed computing system based on the corresponding value for the one or more scheduling attributes. As the scheduling attributes may define start and/or stop times for executing each task 204 in the distributed computing system, the values for these scheduling attributes may themselves be used for scheduling 1002 execution of the tasks 204 in the distributed computing system. Thus, the tasks 204 may be scheduled 1002 for execution using an optimal or near-optimal set of scheduling attributes derived by applying a solver to an ILP problem describing the tasks 204 and the distributed computing system. This may produce a reduced makespan for executing the tasks 204 compared to other scheduling algorithms, improving system performance and efficiency.

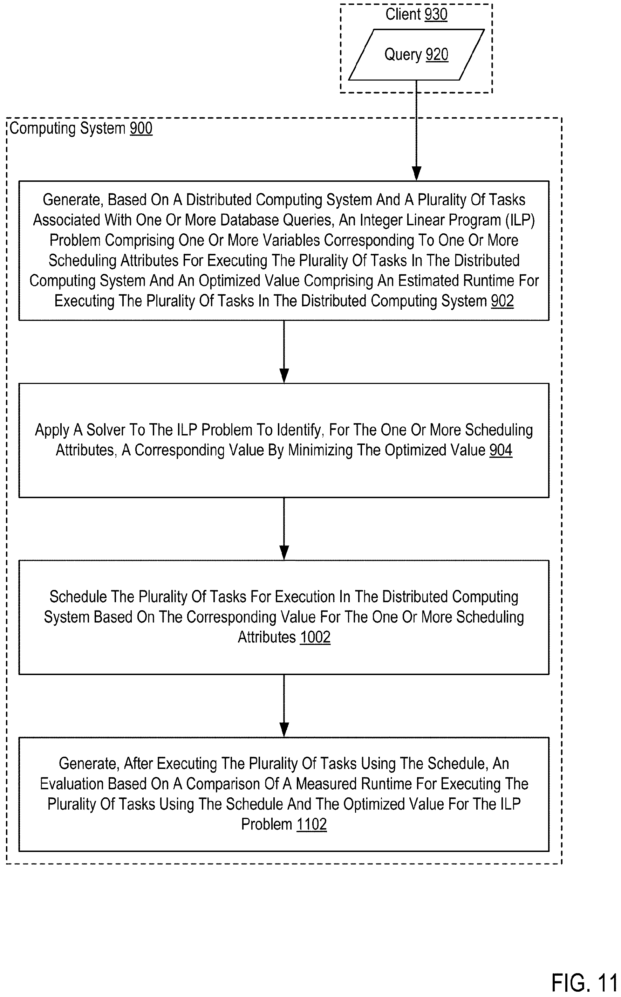

For further explanation, Fig. 11 sets forth a flowchart of another example method of scheduling tasks for distributed query execution in accordance with some embodiments of the present disclosure. The method of Fig. 11 also includes generating 1102, after executing the plurality of tasks 204 using the schedule, an evaluation based on a comparison of a measured runtime for executing the plurality of tasks 204 using the schedule and the optimized value for the ILP problem. In some embodiments, applying 904 the solver to the ILP problem results in a set of variables approaching, as an optimized value, an optimal makespan for executing the plurality of tasks 204. The estimated makespan using this set of variables may be used as a basis of comparison against the makespans for executing the plurality of tasks 204 other scheduling algorithms.

An evaluation may then be generated 1102 by comparing the runtime (e.g., the makespan) for executing the plurality of tasks 204 using this schedule generated using some scheduling algorithm to the estimated runtime for executing the plurality of tasks 204 using the variables produced by applying 904 the solver to the ILP problem. This evaluation may include, for example, visualizations depicting the difference between the runtime and the optimized value, calculations based on the runtime and the optimized value, or other evaluations as can be appreciated.

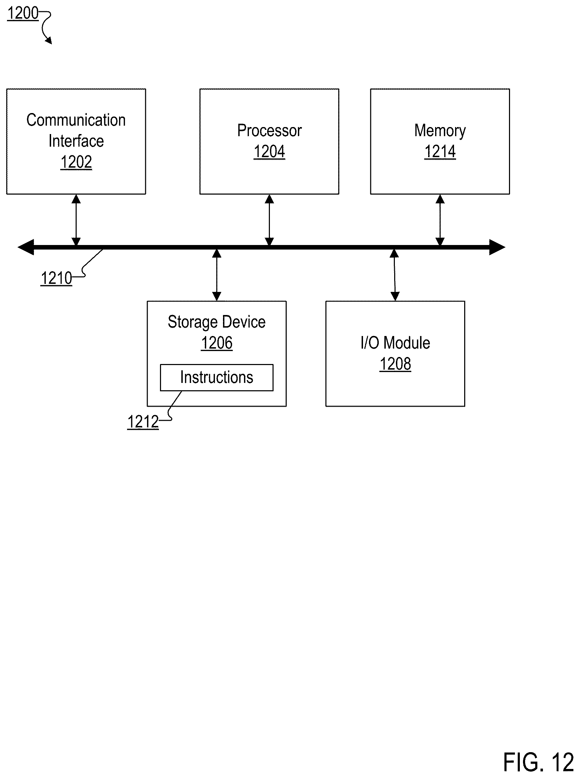

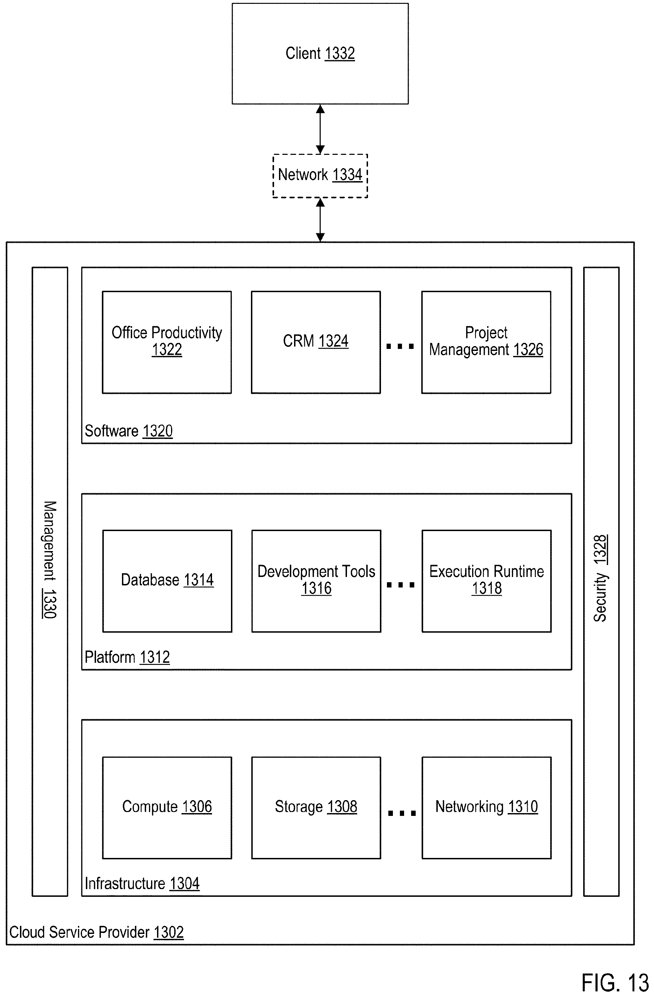

For further explanation, the sections included below provide some details regarding technologies that may be used to support scheduling tasks for distributed query execution in accordance with some embodiments. For example, Fig. 12 sets forth an example of a computing device that may be used for some portion of scheduling tasks for distributed query execution in accordance with some embodiments. As an additional example of technologies that may be used to support scheduling tasks for distributed query execution, Fig. 13 sets forth a block diagram of a cloud service provider 1302 service architecture in accordance with some embodiments of the present disclosure.

For further explanation, Fig. 12 illustrates an exemplary computing device 1200 that may be specifically configured to perform one or more of the processes described herein. As shown in Fig. 12, computing device 1200 may include a communication interface 1202, a processor 1204, a storage device 1206, an input/output (I/O) module 1208, and computer memory 1214 communicatively connected one to another via a communication infrastructure 1210. While an exemplary computing device 1200 is shown in Fig. 12, the components illustrated in Fig. 12 are not intended to be limiting. Additional or alternative components may be used in other embodiments. Components of computing device 1200 shown in Fig. 12 will now be described in additional detail.

Communication interface 1202 may be configured to communicate with one or more computing devices. Examples of communication interface 1202 include, without limitation, a wired network interface (such as a network interface card), a wireless network interface (such as a wireless network interface card), a modem, an audio/video connection, and any other suitable interface.

Processor 1204 generally represents any type or form of processing unit capable of processing data and/or interpreting, executing, and/or directing execution of one or more of the instructions, processes, and/or operations described herein. Processor 1204 may perform operations by executing computer-executable instructions 1212 (e.g., an application, software, code, and/or other executable data instance) stored in storage device 1206.

Storage device 1206 may include one or more data storage media, devices, or configurations and may employ any type, form, and combination of data storage media and/or device. For example, storage device 1206 may include, but is not limited to, any combination of non-volatile media and/or volatile media. Electronic data, including the data described herein, may be temporarily and/or permanently stored in storage device 1206. For example, data representative of computer-executable instructions 1212 configured to direct processor 1204 to perform any of the operations described herein may be stored within storage device 1206. In some examples, data may be arranged in one or more databases residing within storage device 1206.

I/O module 1208 may include one or more I/O modules configured to receive user input and provide user output. I/O module 1208 may include any hardware, firmware, software, or combination thereof supportive of input and output capabilities. For example, I/O module 1208 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 1208 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 1208 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 1200.

For further explanation and as an additional example of a supporting technology for scheduling tasks for distributed query execution, Fig. 13 sets forth a block diagram of a cloud service provider service architecture in accordance with some embodiments. The cloud service provider 1302 can deliver a variety of resources through a services-based consumption model where resources are consumed on-demand and as-a-service. Cloud service providers can provide services via cloud platforms such as, for example, Microsoft Azure^{™}, Amazon Web Services ('AWS')^{™}, Google Cloud Platform ('GCP')^{™}, and others. In Fig. 13, the cloud service provider 1302 is accessed from a client device 1334 via a network 1332.

Fig. 13 depicts an embodiment where software 1320 is delivered as a service. Software-as-a-service ('SaaS') is a model where software applications are delivered over the internet as-a-service. Rather than installing and maintaining software locally, users can access software via a web browser or other network connected interface, eliminating the need for complex software and hardware management on the client-side. In Fig. 13, as examples of software 1320 that can be delivered as-a-service, the illustrated embodiment includes office productivity 1322 software, customer relationship management ('CRM') 1324 software, and project management 1326 software. The office productivity 1322 software can include applications designed to facilitate common business and personal tasks, including word processing applications, applications for spreadsheet creation, presentation design applications, and many others. The CRM 1324 software can include applications for managing a business organization's relationships and interactions with customers and potential customers. The project management 1326 software can include applications designed to help teams plan, organize, and manage projects efficiently by facilitating collaboration and tracking the progress of projects. Readers will appreciate that in other embodiments, other types of software may be delivered using a SaaS model.

Fig. 13 depicts an embodiment where platforms 1312 can be delivered as a service. Platform-as-a-service ('PaaS') is a model that provides cloud customers with platform resources that they can use to develop, run, and manage applications without the complexity of deploying and managing such infrastructure on their own. In Fig. 13, as examples of platform 1312 resources that can be delivered as-a-service, the illustrated embodiment includes database 1314 services, development tools 1316 services, and execution runtime 1318 services. The database 1314 services can be used to provide access to databases without management overhead for the user as the cloud service provider manages the provisioning, scaling, and maintenance of the databases. The development tools 1316 services can provide developers with tools to design, develop, test, and deploy applications without needing to manage the underlying infrastructure. The execution runtime 1318 services can provide environments where applications or other forms of computer program code can be executed, including services to scale the execution environment. Readers will appreciate that in other embodiments, other platform resources may be delivered using a PaaS model.

Fig. 13 depicts an embodiment where infrastructure 1304 can be delivered as a service. Infrastructure-as-a-Service ('IaaS') is a model that provides virtualized computing resources over the internet, such that infrastructure such as servers, storage, networks, and others may be leased on demand rather than purchasing and maintaining physical hardware. In Fig. 13, as examples of infrastructure 1304 resources that can be delivered as-a-service, the illustrated embodiment includes compute 1306 services, storage 1308 services, and networking 1310 services. The compute 1306 services can be used to provide on-demand access to computational resources such as VMs, containers, and serverless functions, where the cloud service provider manages the provisioning, scaling, and maintenance of such resources. The storage 1308 services can provide storage resources that can be used to store and access data, without the need for customers to purchase and manage on-premises physical storage resources. The networking 1310 services can provide the ability to create and manage virtualized networking resources such as, for example, virtual private networks ('VPNs'), firewalls, load balancers, and more. Readers will appreciate that in other embodiments, other infrastructure resources may be delivered using a PaaS model.

The cloud service provider of Fig. 13 also provides management 1330 resources. The management 1330 resources can include, for example, tools and interfaces that enable customers to efficiently deploy, monitor, and manage, their cloud services. Such tools can include web-based management consoles, command-line interfaces ('CLIs'), APIs, automation tools, and other tools.

The cloud service provider of Fig. 13 also provides security 1328 resources. The security 1328 resources can include, for example, tools and services to help customers protect their cloud environments and ensure compliance with security standards. These tools and services may provide specific aspects of security, including identity and access management, network security, threat detection, compliance management, and others.

Readers will appreciate that many of the components described above may be delivered as services from a cloud service provider. For example, the virtual machines, containers, and pods described above may all be delivered via a cloud service provider. In other embodiments, other forms of compute resources may be used in place of the virtual machines or other compute resource. For example, AWS EC2 instances or other form of cloud compute instances may be utilized in place of the virtual machines.

Advantages and features of the present disclosure can be further described by the following statements:
1. A method of scheduling tasks for distributed query execution, comprising: assigning, to a plurality of tasks associated with one or more database queries, a corresponding priority value based on at least one of: an estimated runtime for each of the plurality of tasks and one or more task dependencies; and generating a schedule for executing the plurality of tasks in the distributed computing system by iteratively scheduling, for each task of the plurality of tasks, execution of a highest priority pending task able to be executed in a distributed computing system, wherein the highest priority pending task is included in a pending subset of the plurality of tasks pending execution in the distributed computing system.
2. The method of statement 1, further comprising: assigning, to an other plurality of tasks associated with another database query received during execution of the plurality of tasks, another corresponding priority value; and adding the other plurality of tasks to the pending subset of the plurality of tasks.
3. The method of statements 1 or 2, wherein iteratively scheduling execution of a highest priority pending task of the plurality of pending tasks able to be executed in the distributed computing system comprises scheduling execution of the highest priority pending task in response completion of an executed task.
4. The method of any combination of one or more of statements 1-3, wherein iteratively scheduling execution of a highest priority pending task of the plurality of pending tasks able to be executed in the distributed computing system comprises selecting the highest priority pending task having a degree of parallelism less than or equal to a number of available nodes in the distributed computing system.
5. The method of any combination of one or more of statements 1-4, wherein iteratively scheduling execution of a highest priority pending task comprises selecting the highest priority pending task having one or more placement constraints supported by the distributed computing system.
6. The method of any combination of one or more of statements 1-5, wherein each task of the plurality of tasks comprises a subset of a distributed execution plan for an associated database query of the one or more database queries.
7. The method of any combination of one or more of statements 1-6, further comprising: generating, for each database query of the one or more database queries, a corresponding distributed execution plan comprising a directed acyclic graph; and wherein each edge of the directed acyclic graph corresponds to a task dependency of the one or more task dependencies, and wherein each node of the directed acyclic graph comprises a task of the plurality of tasks.
8. The method of any combination of one or more of statements 1-7, further comprising: generating, based on the plurality of tasks and the distributed computing system, an integer linear program (ILP) problem comprising one or more variables corresponding to one or more scheduling attributes for executing the plurality of tasks in the distributed computing system and an optimized value comprising an estimated runtime for executing the plurality of tasks in the distributed computing system; applying a solver to the ILP problem to identify, for the one or more scheduling attributes, a corresponding value by minimizing the optimized value; and generating an evaluation based on a comparison of a measured runtime for executing the plurality of tasks using the schedule and the optimized value of the ILP problem.
9. A method, comprising: generating, based on a distributed computing system and a plurality of tasks associated with one or more database queries, an integer linear program (ILP) problem comprising one or more variables corresponding to one or more scheduling attributes for executing the plurality of tasks in the distributed computing system and an optimized value comprising an estimated runtime for executing the plurality of tasks in the distributed computing system; and applying a solver to the ILP problem to identify, for the one or more scheduling attributes, a corresponding value by minimizing the optimized value.
10. The method of statement 9, further comprising scheduling the plurality of tasks for execution in the distributed computing system based on the corresponding value for the one or more scheduling attributes.
11. The method of statements 9 or 10, further comprising generating, after executing the plurality of tasks in the distributed computing system using a schedule, an evaluation based on a comparison of a measured runtime for executing the plurality of tasks using the schedule and the optimized value for the ILP problem.
12. The method of any combination of one or more of statements 9-11, further comprising: assigning, to the plurality of tasks, based on at least one of: an estimated runtime for each of the plurality of tasks and one or more task dependencies, a corresponding priority value; and generating the schedule by iteratively scheduling, for each task of the plurality of tasks, execution of a highest priority pending task able to be executed in the distributed computing system, wherein the highest priority pending task is included in a pending subset of the plurality of tasks.
13. The method of method of any combination of one or more of statements 9-12 wherein the ILP problem comprises a plurality of parameters comprising: one or more attributes of the plurality of tasks and one or more attributes of a plurality of nodes of the distributed computing system.
14. An apparatus for scheduling tasks for distributed query execution, comprising: a memory; and one or more processing devices, operatively coupled to the memory, the one or more processing devices configured to: assign, to a plurality of tasks associated with one or more database queries, a corresponding priority value based on at least one of: an estimated runtime for each of the plurality of tasks and one or more task dependencies; and generate a schedule for executing the plurality of tasks in the distributed computing system by iteratively schedule, for each task of the plurality of tasks, execution of a highest priority pending task able to be executed in a distributed computing system, wherein the highest priority pending task is included in a pending subset of the plurality of tasks pending execution in the distributed computing system.
15. The apparatus of statement 14, wherein the one or more processing devices are further configured to: assign, to another plurality of tasks associated with another database query received during execution of the plurality of tasks, another corresponding priority value; and add the other plurality of tasks to the pending subset of the plurality of tasks.
16. The apparatus of statements 14 or 15, wherein, to iteratively schedule execution of a highest priority pending task of the plurality of pending tasks able to be executed in the distributed computing system, the one or more processing devices are further configured to schedule execution of the highest priority pending task in response to completion of an executed task.
17. The apparatus of method of any combination of one or more of statements 14-16, wherein, to iteratively schedule execution of a highest priority pending task of the plurality of pending tasks able to be executed in the distributed computing system, the one or more processing devices are further configured to select the highest priority pending task having a degree of parallelism less than or equal to a number of available nodes in the distributed computing system.
18. The apparatus of any combination of one or more of statements 14-17, wherein, to iteratively schedule execution of a highest priority pending task of the plurality of pending tasks able to be executed in the distributed computing system, the one or more processing devices are further configured to select the highest priority pending task having one or more placement constraints supported by the distributed computing system.
19. The apparatus of any combination of one or more of statements 14-18, wherein each task of the plurality of tasks comprises a subset of a distributed execution plan for an associated database query of the one or more database queries.
20. The apparatus of any combination of one or more of statements 14-19, wherein the one or more processing devices are further configured to: generate, for each database query of the one or more database queries, a corresponding distributed execution plan comprising a directed acyclic graph; and wherein each edge of the directed acyclic graph corresponds to a task dependency of the one or more task dependencies, and wherein each node of the directed acyclic graph comprises a task of the plurality of tasks.

Methods, apparatuses, and products for scheduling tasks for distributed query execution are defined, including: assigning, to a plurality of tasks associated with one or more database queries, a corresponding priority value based on at least one of: an estimated runtime for each of the plurality of tasks and one or more task dependencies; and generating a schedule for executing the plurality of tasks in the distributed computing system by iteratively scheduling, for each task of the plurality of tasks, execution of a highest priority pending task able to be executed in a distributed computing system, wherein the highest priority pending task is included in a pending subset of the plurality of tasks pending execution in the distributed computing system.

Although some embodiments are described largely in the context of a system, method, or in some other way, readers will recognize that embodiments of the present disclosure may also take the form of a computer program product disposed upon computer readable storage media for use with any suitable processing system. Such computer readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances (e.g., one or more AWS EC2 instances), in one or more serverless compute instances offered such as those offered by a cloud services provider, in one or more event-driven compute services such as those offered by a cloud services provider, or in some other execution environment.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

## Claims

1. A method of scheduling tasks for distributed query execution, comprising:
assigning (302), to a plurality of tasks (204a-m) associated with one or more database queries (320), a corresponding priority value based on at least one of: an estimated runtime for each of the plurality of tasks (204a-m) and one or more task (204a-m) dependencies; and
generating (304) a schedule for executing the plurality of tasks (204a-m) in a distributed computing system (300) by iteratively scheduling (306), for each task (204a-m) of the plurality of tasks (204a-m), execution of a highest priority pending task (204a-m) able to be executed in a distributed computing system (300), wherein the highest priority pending task (204a-m) is included in a pending subset of the plurality of tasks (204a-m) pending execution in the distributed computing system (300).

2. The method of claim 1, further comprising:
assigning (402), to an other plurality of tasks (204a-m) associated with another database query (320) received during execution of the plurality of tasks (204a-m), another corresponding priority value; and
adding (404) the other plurality of tasks (204a-m) to the pending subset of the plurality of tasks (204a-m).

3. The method of claim 1 or claim 2, wherein iteratively scheduling (304) execution of a highest priority pending task (204a-m) of the plurality of pending tasks (204a-m) able to be executed in the distributed computing system (300) comprises at least one of:
scheduling (502) execution of the highest priority pending task (204a-m) in response completion of an executed task;
selecting (602) the highest priority pending task (204a-m) having a degree of parallelism less than or equal to a number of available nodes (202a-n) in the distributed computing system (300); and
selecting (702) the highest priority pending task (204a-m) having one or more placement constraints supported by the distributed computing system (300).

4. The method of any of claims 1 to 3, wherein each task (204a-m) of the plurality of tasks (204a-m) comprises a subset of a distributed execution plan for an associated database query (320) of the one or more database queries (320).

5. The method of any of claims 1 to 4, further comprising:
generating (802), for each database query (320) of the one or more database queries (320), a corresponding distributed execution plan comprising a directed acyclic graph; and
wherein each edge of the directed acyclic graph corresponds to a task (204a-m) dependency of the one or more task (204a-m) dependencies, and wherein each node (202a-n) of the directed acyclic graph comprises a task (204a-m) of the plurality of tasks (204a-m).

6. The method of any of claims 1 to 5, further comprising:
generating (902), based on the plurality of tasks (204a-m) and the distributed computing system (300), an integer linear program, ILP, problem comprising one or more variables corresponding to one or more scheduling attributes for executing the plurality of tasks (204a-m) in the distributed computing system (300) and an optimized value comprising an estimated runtime for executing the plurality of tasks (204a-m) in the distributed computing system (300);
applying (904) a solver to the ILP problem to identify, for the one or more scheduling attributes, a corresponding value by minimizing the optimized value; and
generating (1102) an evaluation based on a comparison of a measured runtime for executing the plurality of tasks (204a-m) using the schedule and the optimized value of the ILP problem.

7. A method, comprising:
generating (902), based on a distributed computing system (300) and a plurality of tasks (204a-m) associated with one or more database queries (920), an integer linear program, ILP, problem comprising one or more variables corresponding to one or more scheduling attributes for executing the plurality of tasks (204a-m) in the distributed computing system (300) and an optimized value comprising an estimated runtime for executing the plurality of tasks (204a-m) in the distributed computing system (300); and
applying (904) a solver to the ILP problem to identify, for the one or more scheduling attributes, a corresponding value by minimizing the optimized value.

8. The method of claim 7, further comprising scheduling (1002) the plurality of tasks (204a-m) for execution in the distributed computing system (300) based on the corresponding value for the one or more scheduling attributes.

9. The method of claim 7 or claim 8, further comprising generating (1102), after executing the plurality of tasks (204a-m) in the distributed computing system (300) using a schedule, an evaluation based on a comparison of a measured runtime for executing the plurality of tasks (204a-m) using the schedule and the optimized value for the ILP problem.

10. The method of claim 9, further comprising:
assigning (302), to the plurality of tasks (204a-m), based on at least one of: an estimated runtime for each of the plurality of tasks (204a-m) and one or more task (204a-m) dependencies, a corresponding priority value; and
generating (303) the schedule by iteratively scheduling (304), for each task (204a-m) of the plurality of tasks (204a-m), execution of a highest priority pending task (204a-m) able to be executed in the distributed computing system (300), wherein the highest priority pending task (204a-m) is included in a pending subset of the plurality of tasks (204a-m).

11. The method of any of claims 7 to 10 wherein the ILP problem comprises a plurality of parameters comprising: one or more attributes of the plurality of tasks (204a-m) and one or more attributes of a plurality of nodes (202a-n) of the distributed computing system (300).

12. An apparatus for scheduling tasks for distributed query execution, comprising:
a memory; and
one or more processing devices, operatively coupled to the memory, the one or more processing devices configured to:
assign (302), to a plurality of tasks (204a-m) associated with one or more database queries (320), a corresponding priority value based on at least one of: an estimated runtime for each of the plurality of tasks (204a-m) and one or more task (204a-m) dependencies; and
generate (303) a schedule for executing the plurality of tasks (204a-m) in a distributed computing system (300) by iteratively scheduling (304), for each task (204am) of the plurality of tasks (204a-m), execution of a highest priority pending task (204am) able to be executed in a distributed computing system (300), wherein the highest priority pending task (204a-m) is included in a pending subset of the plurality of tasks (204a-m) pending execution in the distributed computing system (300).

13. The apparatus of claim 12, wherein the one or more processing devices are further configured to:
assign (402), to an other plurality of tasks (204a-m) associated with another database query (320) received during execution of the plurality of tasks (204a-m), another corresponding priority value; and
add (404) the other plurality of tasks (204a-m) to the pending subset of the plurality of tasks 204a-m.

14. The apparatus of claim 12 or claim 13, wherein, to iteratively schedule (304) execution of a highest priority pending task (204a-m) of the plurality of pending tasks (204a-m) able to be executed in the distributed computing system (300), the one or more processing devices are further configured to at least one of:
schedule (502) execution of the highest priority pending task (204a-m) in response to completion of an executed task;
select (602) the highest priority pending task (204a-m) having a degree of parallelism less than or equal to a number of available nodes (202a-n) in the distributed computing system (300); and
select (702) the highest priority pending task (204a-m) having one or more placement constraints supported by the distributed computing system (300).

15. The apparatus of any of claims 12 to 14, wherein the one or more processing devices are further configured to:
generate (802), for each database query (320) of the one or more database queries (320), a corresponding distributed execution plan comprising a directed acyclic graph; and
wherein each edge of the directed acyclic graph corresponds to a task (204a-m) dependency of the one or more task (204a-m) dependencies, and wherein each node (202a-n) of the directed acyclic graph comprises a task (204a-m) of the plurality of tasks (204a-m).
